Europäisches Patentamt

European Patent Office

Office européen des brevets

(11) Publication number: **0 339 007**
**A1**

# EUROPEAN PATENT APPLICATION

(21) Application number: **89850125.9**

(22) Date of filing: **19.04.89**

(51) Int. Cl.⁴: **A 01 G 23/08**

(30) Priority: **20.04.88 SE 8801464**

(43) Date of publication of application:
**25.10.89 Bulletin 89/43**

(84) Designated Contracting States:
**AT BE CH DE ES FR GB GR IT LI LU NL SE**

(71) Applicant: **VIMEK AB**
**Box 8**
**S-92 200 Vindeln (SE)**

(72) Inventor: **Nilsson, Lars-Gunnar**
**Slipstensvägen 4306**
**S-922 00 Vindeln (SE)**

(74) Representative: **Onn, Thorsten et al**
**AB STOCKHOLMS PATENTBYRA Box 3129**
**S-103 62 Stockholm (SE)**

(54) **Auxiliary unit for processing felled trees.**

(57) An auxiliary unit for at least lopping felled trees, and preferably, but not necessarily of the type which is intended for mounting on the three-point lifting means of a tractor, and obtaining necessary driving power from the tractor, said unit including a lopping means (31) and at least two feed wheels (12, 19), of which at least one is driven for feeding a tree inserted between the wheels through the unit for lopping. To improve the capacity of such a unit, the feed wheels (12, 19) of the unit are arranged freely in a single vertical plane at the base structure (5) of the unit and at a carrying arm (16), which is compulsorily pivotable about an axis parallel to the rotational axis of the wheels and relative to the structure (5), such as to take its wheel (19) to and from engagement against a tree fed in between the wheels (12, 19).

FIG.1

EP 0 339 007 A1

**Description**

## AUXILIARY UNIT FOR PROCESSING FELLED TREES

The present invention relates to a so-called thinning processor or auxiliary unit for processing felled trees and preferably of the type which is intended for fitting to the three-point lifting mechanism of a conventional agricultural or forestry tractor for driving by the tractor power takeoff. The auxiliary unit can include lopping means, cross-cutting means and driven feed wheels for feeding trees through the unit for lopping and cutting it up.

Such tractor mounted tree-processing auxiliary units are already known, and are generally provided with a winch means for pulling felled trees to the unit and for delivering them between the feed wheels of the unit. One of these wheels is mounted in the unit frame and the other in a pivotably arranged frame which is actuated by at least one hydraulic piston-cylinder arrangement for urging the wheel mounted in the frame with sufficient force against the end portion of the tree inserted between the wheels with the aid of the winch for driving the tree through the unit. The unit is provided with a winch column for enabling the insertion of one end of a tree between the feed wheels with the aid of the winch means. The winch cable is suspended in the winch column in a block in the feed plane and is thus caused, during the final phase of winching in a tree, i.e. when the end of this tree approaches close to the unit, to lift up the tree end and pull it in between the feed wheels, although only providing that the winch cable is coupled comparatively close to the tree end. If this is not the case the winch cable must be re-coupled before it is possible to insert the tree between the feed wheels with the aid of the winch means.

Such re-coupling is time-consuming, however, and must be performed often and nearly always when more than one tree is pulled out at a time. Another capacity-inhibiting disadvantage in the use of a winch means for pulling felled trees to the units, and also for feeding the trees into the unit, is that the trees must be pulled into a position in line with the feed path of the lopping means and feed wheels for at all enabling the tree end to be inserted, with the aid of the winch means, between the feed wheels through the frame which carries the movable wheel. The frame of this wheel, which can be urged against an inserted tree, is also an obstacle to the insertion of a tree, the end of which has been pulled too far forward. To insert such a tree, it must either be pulled backwards the necessary amount so that its end is in front of both feed wheels, or the tractor and auxiliary unit must be moved to a new, suitable position.

In spite of these disadvantages, this type of tractor mounted tree-processing unit is often to be preferred before conventional forest felling machines with the tree-processing unit suspended in a crane, or chassi-mounted, for above all thinning operations, due to the reach which is obtained with the aid of a winch means. Using such tractor-mounted tree-processing units, work is carried out from a service road where the trees are winched one, or several at a time, to the unit, and this has many advantages, not least with respect to the more gentle effect on forest and ground and which is substantially more gentle than conventional felling machines. Due to the large range of the tractor-mounted unit, the distance between service roads can be doubled compared with conventional thinning using crane-mounted thinning units. This results, inter alia, in the advantage that the necessary service road area is reduced to less than half, and the productive forest area increases correspondingly. Large spacing between service roads also results in that a greater amount of logs are prepared at each road, which in turn facilitates and cheapens transport of logs to a service road for lorries and further transport.

The object of the present invention is therefore to eliminate the mentioned disadvantages of tractor mounted tree processing units and thereby to improve the capacity thereof, and this is achieved by the present auxiliary unit having the characterizing features disclosed in the claims.

The present invention will now be described in more detail with reference to the accompanying drawings, which schematically illustrate the unit, and where

Figure 1 is a side view of the unit,

Figure 2 shows the unit seen from above,

Figure 3 is an end view seen substantially along the line III-III in Figure 1,

Figure 4 illustrates the unit from one side during normal insertion of a tree,

Figure 5 is a section substantially along the line V-V in Figure 4,

figures 6 and 7 show the unit from one side and above, respectively, during lifting in a laterally lying tree and

Figure 8 illustrates the area of movement of the unit in accordance with the invention.

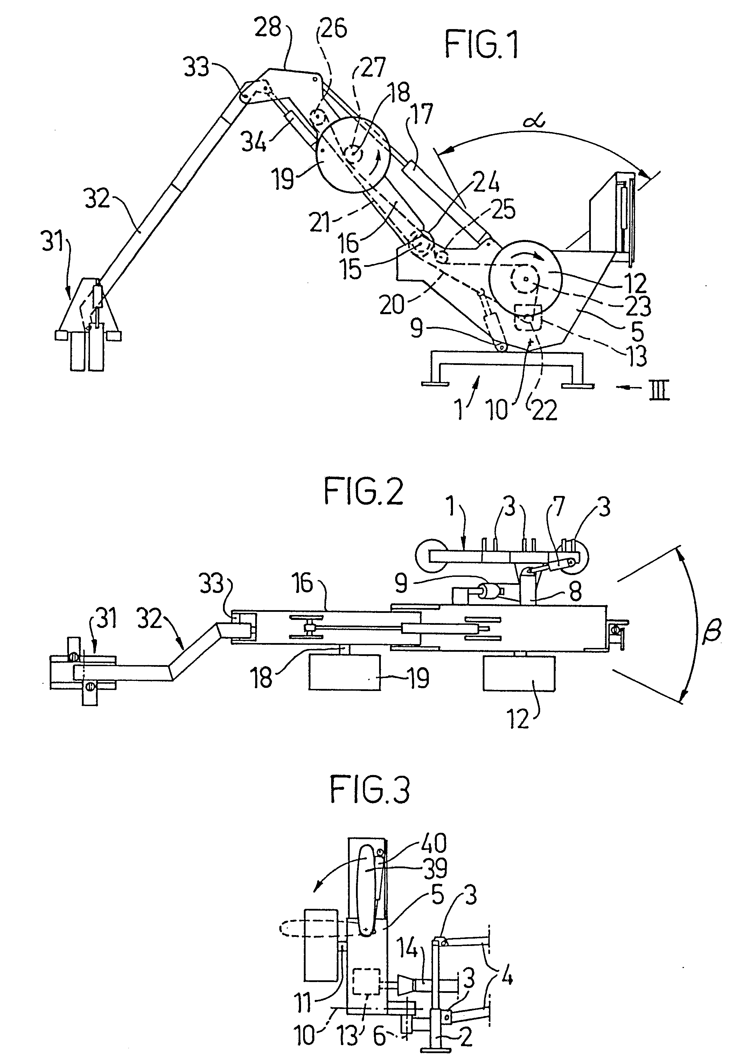

In Figure 1 there is shown the inventive unit, which includes a frame 1 for supporting it on the ground. The frame includes raisable and lowerable legs 2 having supporting feet and three attachments 3 for lifting arms 4 of the three-point lift of an agricultural or forestry tractor. The frame 1 carries the base structure 5 of the unit, and this structure is conventionally pivotable in the horizontal plane about an axis 6, with the aid of a piston-cylinder means 7 arranged between the frame 1 and an arm 8 projecting from the structure 5. Between this arm 8 and the structure 5 there is further arranged a piston-cylinder means 9 for swinging the unit in a vertical plane about an axis 10 through a required angle α.

A feed wheel 12 is mounted to one side of the structure 5, which is suitably of box configuration, on a shaft 11 passing through the structure, inside which there is a gearing means 13 coupled to the tractor power takeoff via a transmission shaft 14 (see Figure 3).

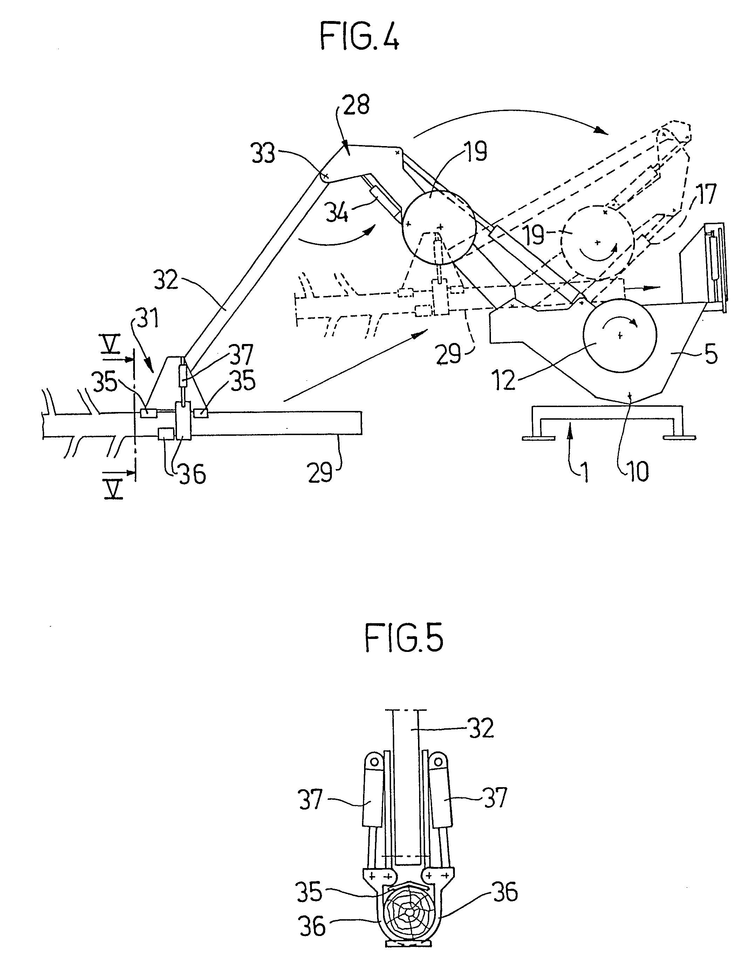

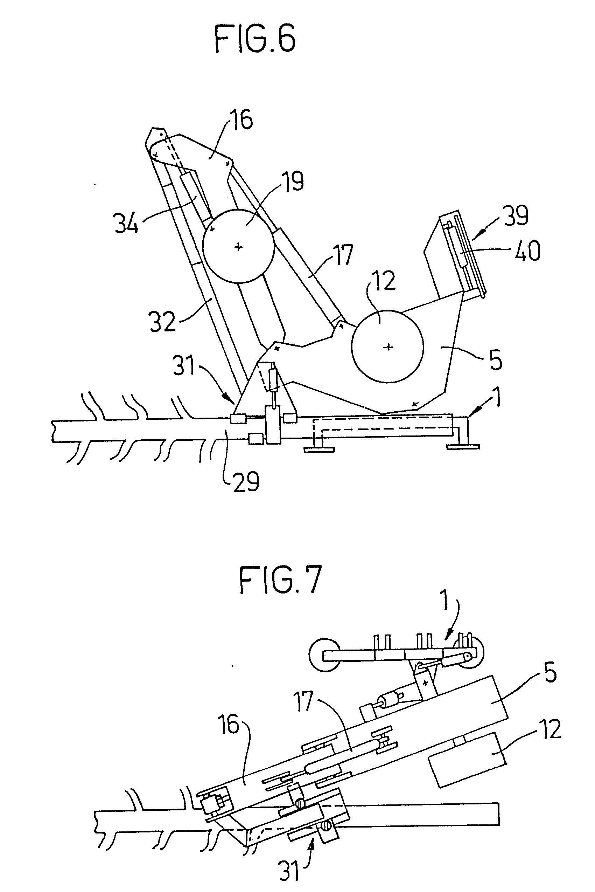

Parallel to the axis 10 there is a shaft 15 on which a carrying arm 16 is pivotably mounted within the walls of the structure 5 and which is urged to pivot with the aid of a piston-cylinder means 17. This arm 16 is also suitably box-shaped and has a shaft 18 on which is mounted a second feed wheel 19 on the same side of the arm 16 and in the same vertical plane as the wheel 12 carried by the structure 5. Both these wheels 12 and 19 are driven from the gearing means 13 with the aid of chains 20 and 21, the chain 20 for driving the wheel 12 being taken round a sprocket 22 on the output shaft of the gearing means, over a chain wheel 23 on the wheel shaft 11 and then over a chain wheel 24 mounted on the carrying arm shaft 15. There is further arranged a sprocket 25 for tensioning the chain 20. The chain 21 for the wheel 19 extends over two end wheels 26, one of which is fastened to the carrier arm shaft 15 while the other 26 is arranged inside the carrier arm. Between these end wheels the chain 21 meshes with a sprocket 27, arranged on the shaft 18 of the wheel 19, on the underside of the sprocket, seen in Figure 1, to give the wheel 19 the intended rotational movement in relation to the wheel 12 so that the two wheels co-act for the forward feed of a tree inserted therebetween, as illustrated by way of example by dashed lines in Figure 4. In the position shown by way of example in Figure 1, of the arm 16 carrying the wheel 19, both wheels 12 and 19 are at their greatest mutual distance and form between them a large gap which facilitates insertion of a tree between them, and since the wheels 12 and 19 are on cantilevered shafts, the insertion of trees which also have their forward ends extending past the wheel 12 mounted on its shaft in the structure 5 is enabled without any problems. In addition, this tree can have been pulled forward (see figures 6 and 7) at an angle, within the swivelling area β (Figure 2) of the unit in the horizontal plane. With a tree inserted between the wheels 12 and 19 of the unit, the carrying arm 16 is swung with the aid of its piston-cylinder means 17 clockwise in Figure 4, for engaging the wheel 19 against the tree end, as illustrated with the aid of dashed lines in Figure 4, and the engagement force can be regulated with the aid of the piston cylinder means 17.

When the wheels 12 and 19 engage against an inserted tree 29, they should be substantially opposite each other, such as not to subject the tree 29 therebetween to any large bending moment. For this reason the wheels 12 and 19 are arranged at approximately the same radial distance from the pivoting shaft 15 of the carrying arm. If it is a question of generally large trees which are to be lopped and cut, the feed wheel 19 can be arranged at a greater radial distance from the shaft 15 than the wheel 12.

With the embodiment illustrated on the drawings, the lopping means 31 of the unit is attached to the end of an arm 32 which is pivotably mounted via a shaft 33 to the carrying arm end 28 and is pivoted with the aid of a piston-cylinder means 34. The arm 32 and carrying arm 16 together form a crane which carries the lopping means 31. The latter includes two mutually spaced fixed knives 35 and two movable lopping knives 36 therebetween, the latter knives being operated by their respective piston-cylinder means 37. The knives 36 also function as grippers for gripping a tree 29 lying on the ground and inserting it between the feed wheels 12 and 19 of the unit with the aid of the crane formed by the arms 32 and 16.

As will be seen best from Figure 2, the arm 32 is given an angled configuration so that the lopping means 31 is always in the same vertical plane as the feed wheels 12 and 19, which is necessary for obtaining the intended lopping function.

Although it has not been shown on the drawings, but has been mentioned earlier, a winch means is included in the present tree processing unit, for pulling felled trees to the unit and thereby to the service road where the tractor-carried unit is normally positioned.

The inventive tree processing unit is illustrated in Figure 4 while gripping a tree 29, which is in line with the feed wheels 12 and 19 of the unit. The tree is gripped with the aid of the lopping knives 36 of the lopping means, and is lifted up with the aid of both arms 32 and 16 for having its end inserted between the freely accessible wheels 12 and 19. When the carrying arm 16 is swung, the wheel 19 accompanies this movement and finally swings down towards the wheel 12 mounted in the structure 5, thus coming into engagement with the tree end coming between the wheels. The necessary engagement force is achieved with the aid of the carrying arm piston-cylinder means 17, and the feed wheels driven by the tractor power takeoff via the chains 20 and 21 are thus caused to feed the tree 29 between themselves, simultaneously as it is lopped by the lopping knives in the lopping means 31, which also constitutes support for the tree during its passage through the unit. In any case, at the beginning of the feed movement of the tree through the unit, the tree rests with its top end against the ground while at the same time the structure 5 of the unit is tilted to the required angle about its axis 10 with the aid of the piston-cylinder means 9, for distributing the weight of the tree so that there is no great oblique load in the lopping means 31 itself, which could result in that the knives 33 cut into the wood itself.

At the upstream end of the unit there is arranged a cutting means 39 in the form of a circular saw, or preferably a driven chain saw, which can be operated by hand with the aid of a piston-cylinder means 40, as will be seen particularly in Figure 3, for cutting lopped trees into intended lengths. In a manner known per se, a measuring wheel can be arranged between the feed wheel 12 and the cutting means 39, although this is not shown on the drawings, and the measuring wheel can also be support for a tree during its forward feed. If a measuring wheel is provided, the wheel 19 should be arranged at a distance from its axis 15 so that when it is urged against a tree between the wheels 12 and 19 it will always, i.e. independent of tree diameter, assure that the tree is kept pressed against the measuring wheel also, so that the latter is always driven by the tree and measures its length in the intended manner.

In figures 6 and 7 there is illustrated gripping a tree lying to one side of the unit, where the tree end extends past the wheel 12 of the unit. In this case the tree is gripped with the aid of the knives 36 of the lopping means, and is lifted up with the aid of the crane. The tilted unit is swung about the axis 6 until the tree is in line with both wheels 12 and 19 and the lopping means 31. Since the feed wheels in accordance with the present invention are freely accessible, the tree can be inserted between them from one side also, and this has great importance from the capacity aspect, since it is not necessary to pull the tree backwards to insert it between the wheels, as is the case with known units of the type in question. This unique arrangement of the wheels 12 and 19 also results in that the winch means can be used for inserting trees between the feed wheels in a substantially more effective way than is the case with known units of the type in question. Thus, this invention is not restricted to the embodiment illustrated on the drawings, with an arm 32 for carrying the lopping means 31 functioning as gripping means, but also includes embodiments without such an arm, the lopping means 31 then being arranged at the base structure 5 of the unit. The cable of the winch means can then be pulled over a sheeve, which is displaceable laterally, e.g. with the aid of a piston-cylinder means suspended in a guide or the like fixed to the end 28 of the carrying arm. This guide should suitably project out from the carrying arm to an extend such that said sheeve has its outer position situated outside the wheels 12 and 19.

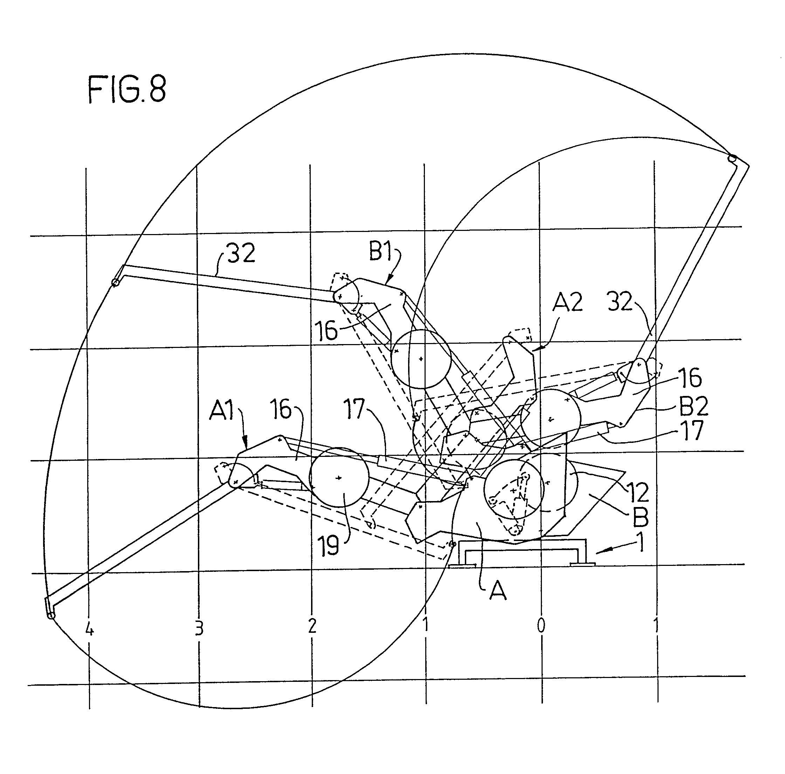

The field of action of the unit is illustrated in Figure 8, where A and B denote both end positions of the base structure 5 with respect to tilting movement about the axis 10, and A1, A2 and B1, B2, respectively, denote the end positions for the carrying arm 16 in the respective positions A and B of the base structure. One end position of the arm 32 is illustrated by full lines, and its other end position is illustrated by dashed lines.

The present invention is not restricted to what has been described above and illustrated on the drawings, and can be amended and modified in many different ways within the scope of the inventive concept disclosed in the following claims.

## Claims

1. An auxiliary unit for at least lopping felled trees, and preferably but not necessarily of the type which is intended to be mounted on the three-point lifting means of a tractor, with necessary driving power being obtained from the tractor, said unit including a lopping means (31) and at least two feed wheels (12, 19), of which at least one is driven, such as to urge a tree inserted between the feed wheels through the unit for lopping, characterized in that the feed wheels (12, 19) are freely arranged in a single vertical plane at the base structure (5) of the unit and at a carrying arm (16), which is compulsorily pivotable about a shaft parallel to the rotational axis of the feed wheels and relative to the structure, for moving its wheel (19) into and out of engagement against a tree fed in between the wheels.

2. Unit as claimed in claim 1, characterized in that for the compulsorily pivoting of the carrying arm (16) there is arranged a piston-cylinder means (17) which is also adepted for urging the feed wheel (19) towards a tree inserted between the feed wheels, such that a force required for the forward feed of the tree is obtained.

3. Unit as claimed in claim 1 or 2, characterized in that the lopping means (31) of the unit is carried by an arm (32) compulsorily pivotable about the carrying arm (16) and in the same vertical plane as both feed wheels (12, 19).

4. Unit as claimed in any one of the preceding claims, characterized in that the lopping means (31) includes lopping knives (36) also functioning as gripping means and actuated either by their individual, or by a common piston-cylinder means (37).

5. Unit as claimed in any one of the preceding claims, characterized in that the base structure (5) of the unit is pivotable about an axis (10) parallel to the axes of the feed wheels, and with the aid of piston-cylinder means (9, 7) is also pivotable about an axis (6) arranged at an angle to said axis (10).

6. Unit as claimed in any one of the preceding claims, characterized in that a cutting means (39) is also included in the unit, this means (39) preferably being a driven chain saw for cutting the trees into intended lengths.

FIG.1

FIG.2

FIG.3

# FIG.4

# FIG.5

# FIG.6

# FIG.7

FIG.8

EP 0 339 007 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4 ) |
|---|---|---|---|
| Y | US-A-3556183 (BUSCH)<br>* column 2, line 34 - column 5, line 62; figures 1-16 * | 1-6 | A01G23/08 |
| Y | FR-A-2292563 (MIDJYSK HYDRAULIK)<br>* page 3, line 28 - page 8, line 23; figures 1-3 * | 1-6 | |
| A | AU-B-514525 (WILLIAMES)<br>* page 3, line 19 - page 4, line 25; figures 1-3 * | 1 | |

**TECHNICAL FIELDS SEARCHED (Int. Cl.4 )**

A01G
B27L

The present search report has been drawn up for all claims

| Place of search | Date of completion of the search | Examiner |
|---|---|---|
| THE HAGUE | 02 AUGUST 1989 | HERYGERS J.J. |

EPO FORM 1503 03.82 (P0401)